# EUROPEAN PATENT APPLICATION

(11) **EP 4 782 704 A1**
(43) Date of publication of application: **29.07.2026**
(21) Application number: 26153747.6
(22) Date of filing: 23.01.2026
(51) Int. Cl.: F15B 13/08, B60G 17/052

(54) **INTELLIGENT AIR MANAGEMENT MODULE**

(30) Priority: 27.01.2025 CN 202510127754
(71) Applicant: BeijingWest Industries Co. Ltd., 102400 Beijing (CN)
(72) Inventor: SEKANICK, Brandon, OH, 795 Treasury Dr Apt F, Kettering, 45429 (US); ADAMS, Dean W., OH, 5 Painters Ct, Springboro, 45066 (US); BORGEMENKE, Daniel Norbert, OH, 580 Beckley Farm Way, Springboro, 45066 (US); BEAM, Brian Robert, OH, 3639 Berrywood Drive, Dayton, 45424 (US); D'AMICO, Brian M., OH, 138 Crown Point Drive, Dayton, 45458 (US)
(74) Representative: Lukaszyk, Szymon

(57) **Abstract**

An air management module for use in a vehicle suspension system, the module including a plurality of inlets, outlets, and control valves and a manifold. The plurality of inlets configured to receive compressed air from a vehicle air compressor and the plurality of outlets configured to provide the compressed air to the outlets. The control valves configured to receive the compressed air from the inlets and selectively provide the compressed air to the outlets. The manifold including a plurality of wall members layered on top of one another, each wall member defining a plurality of apertures, some of the apertures collectively forming a plurality of passages configured to direct the compressed air from the plurality of outlets to the plurality of inlets.

## Description

### Technical Field

The present disclosure relates to vehicle pneumatic suspension systems, in particular a controller housing for a vehicle pneumatic suspension system.

### Background of the Invention

Certain vehicles may include a suspension air lift system including an air supply unit (ASU). The ASU may include a compressor assembly, a bracket, various pipes, tubes wires, and hoses, and an integrated air management module (IAMM). The IAMM may enable a user or driver to control and operate the vehicle's air springs.

### Summary of the invention

The present disclosure provides an air management module for use in a vehicle pneumatic suspension system. The air management module may include a plurality of inlets, a plurality of outlets, a plurality of control valves, and a manifold. The plurality of inlets may be configured to receive compressed air from a vehicle air compressor or from stored compressed air in a remote reservoir. The plurality of outlets may be configured to provide the compressed air to a plurality of vehicle air springs or to a vehicle compressed air storage remote reservoir for future use. The plurality of control valves may be configured to receive the compressed air from the inlets and selectively provide the compressed air to the plurality of outlets. The manifold may be configured to route the compressed air from the plurality of inlet to the plurality outlets and the manifold may include a plurality of wall members that may be layered on top of one another. Each wall member of the plurality of wall members may define a plurality of apertures, and the plurality of apertures may collectively form a plurality of passages that may be configured to direct the compressed air from the plurality of outlets to the plurality of inlets.

The plurality of wall members of the manifold may be fixed to one another by molecular bond.

The plurality of wall members may include an outer wall member, a medial wall member, and an inner wall member, the medial wall member may be disposed between the outer wall member and the inner wall member. At least one of the inner wall member and the outer wall member may be hermetically sealed to the middle wall member.

According to another aspect of this disclosure, an air management module for use in a vehicle pneumatic suspension system is provided. The air management module may include a plurality of inlets, a plurality of outlets, a plurality of control valves, and a manifold. The plurality of inlets may be configured to receive compressed air from a vehicle air compressor or remote reservoir. The plurality of outlets may be configured to provide the compressed air to a plurality of the vehicle springs or to a remote reservoir for future use and the plurality of control valves may be configured to receive the compressed air from the inlets and selectively provide the compressed air to the plurality of outlets. Each control valve of the plurality of control valves may include a first portion and a second portion. The manifold may be configured to route the compressed air from the plurality of inlets to the plurality of outlets, and the manifold may include an outer layer, an inner layer, and medial layer. The plurality of inlets and the plurality of outlets may be connected to the outer layer. The first portion of each control valve of the plurality of control valves may be seated within the inner layer. The medial layer may be sandwiched between the outer layer and the inner layer. The medial layer, the outer layer, and the inner layer may be injection molded. The medial layer may include a rear surface and a front surface, the rear surface may oppose the front surface. The rear surface of the medial layer may be fixed to the inner layer and the front surface of the medial layer may be fixed to the outer layer.

According to another aspect of this disclosure, a method of manufacturing an air management module is provided. The method may include forming, by injection molding, an outer manifold layer that may define one or more first passages and one or more apertures that may be configured to receive an inlet connector or an outlet connector. The inlet and outlet connectors may be fluidly connected to the one or more first passages. The method may also include forming, by injection molding, a medial manifold layer that may define one or more second passages. The method may also include forming, by injection molding, an inner manifold layer that may define one or more third passages. The one or more first passages, the one or more second passages, and the one or more third passages may be collectively configured to form one or more flow-control orifices. The one or more flow-control orifices may be configured to restrict flow sufficiently to create a pressure differential between the inlet connector and the outlet connector. The method may also include fixing by friction welding, the medial manifold layer to the outer manifold layer and the inner manifold layer.

### Brief description of the drawings

FIG. 1 illustrates a perspective view of an exemplary suspension air lift system.
FIG. 2 illustrates a perspective view of an integrated air management module (IAMM) of the suspension air lift system shown in FIG. 1.
FIG. 3 illustrates an exploded-perspective view of the IAMM.
FIG. 4 illustrates an exploded-front-perspective view of a multi-piece manifold and a hold-down plate of the IAMM.
FIG. 5 illustrates an exploded-rear-perspective view of the multi-piece manifold shown in FIG. 4.
FIG. 6 illustrates a detail-perspective view of portions of the multi-piece manifold provided with mating surfaces.
FIG. 7A illustrates a schematic-cross-sectional view of a portion of the mating surfaces shown in FIG. 6.
FIG. 7B illustrates a close-up schematic-cross-sectional view of a portion of the mating surfaces shown in FIG. 6.
FIG. 8 illustrates rear-perspective view of the multi-piece manifold.
FIG. 8A shows a perspective view of a fastener configured for attachment to the multi-piece manifold.
FIG. 8B shows a detail view of a vibration formed rivet taking along the lines 8B in FIG. 8.
FIG. 9 shows cross-sectional view of a check valve disposed in the multi-piece manifold.
FIG. 10 shows an electromechanical schematic diagram of the IAMM.

### Detailed Description

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

This invention is not limited to the specific embodiments and methods described below, as specific components and/or conditions may, of course, vary. Furthermore, the terminology used herein is used only for the purpose of describing particular embodiments of the present invention and is not intended to be limiting in any way.

As used in the specification and the appended claims, the singular form "a," "an," and "the" comprise plural referents unless the context clearly indicates otherwise. For example, reference to a component in the singular is intended to comprise a plurality of components.

The term "substantially" or "about" may be used herein to describe disclosed or claimed embodiments. The term "substantially" or "about" may modify a value or relative characteristic disclosed or claimed in the present disclosure. In such instances, "substantially" or "about" may signify that the value or relative characteristic it modifies is within ± 0%, 0.1%, 0.5%, 1%, 2%, 3%, 4%, 5% or 10% of the value or relative characteristic.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). The term "and/or" includes any and all combinations of one or more of the associated listed items.

Although the terms first, second, third, etc. may be used to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

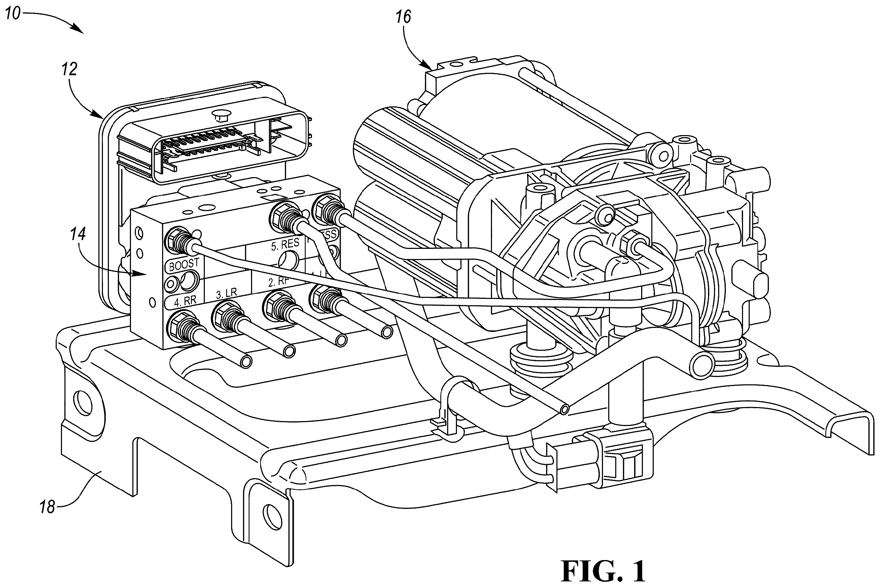

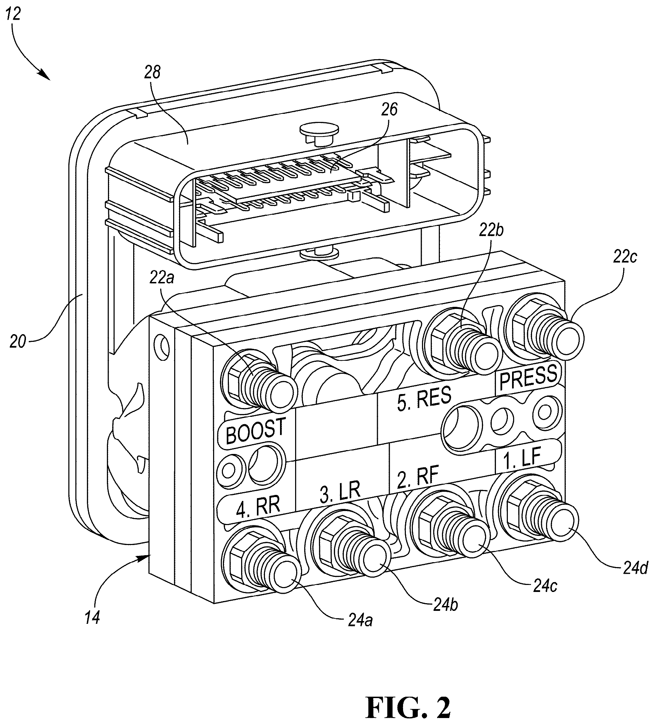

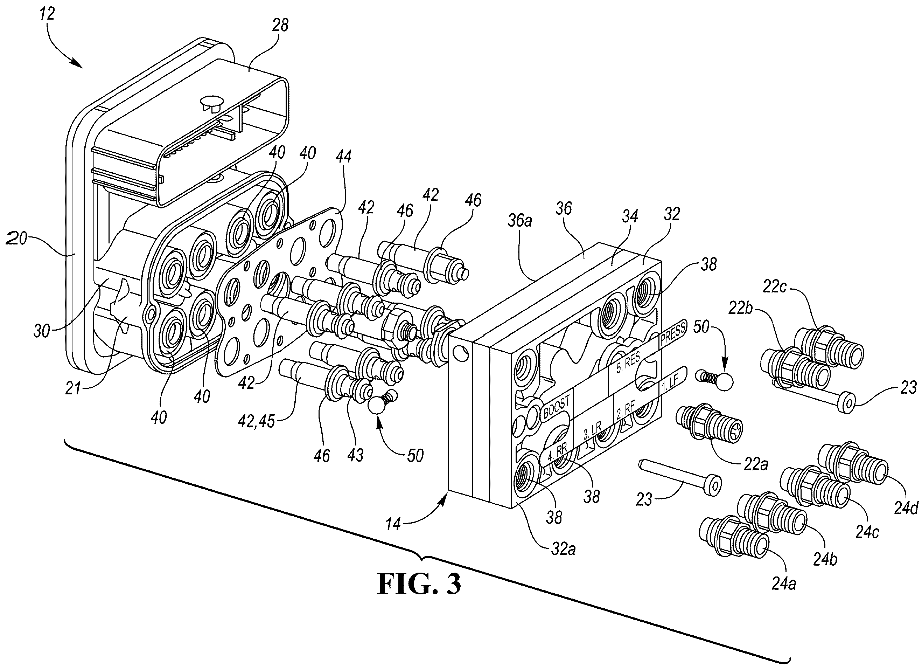

FIG. 1 shows a portion of a pneumatic suspension system 10 configured for use in a vehicle. FIG. 2 shows a perspective view of the IAMM 12. The labels identify the external connections (not shown) the IAMM has with the compressor (BOOST and PRESS), with the remote reservoir (RES), and with the vehicle air springs (RR, LR, RF, and LF). FIG. 3 shows a perspective-exploded view of the IAMM according to one or more embodiments. The system 10 includes an integrated air management module (IAMM) 12 provided with a manifold 14 that may be configured to receive compressed air from an air compressor 16 and a housing 20 that may house one or more controllers or an electronic control unit (ECU) 26. The air compressor 16 and IAMM 12 may be supported by one or more support members or brackets 18 that may be fixed to one or more portions of the vehicle (e.g., chassis or frame members).

As will be described herein, the manifold may provide a number of advantages over known manifolds, such a reduction in cost and weight. The manifold 14 may be configured to fluidly connect the air compressor 16 to one or more vehicle air springs (not illustrated) or to a remote storage reservoir (not illustrated) and control the air flow so that portions of the vehicle may be raised and lowered in a relatively even and consistent manner. Controlling the raising and lowering of the vehicle by way of the air springs may require constricting or controlling the flow of air through the manifold 14 to create a pressure differential between the outlets of the front and the rear of the vehicle in order to keep it perfectly level as it raises or lowers. As will be described in greater detail below, the manifold may include or define one or more flow-control orifices formed by passages and apertures within the manifold.

As an example, the manifold 14 may be comprised of one or more plastic or polymeric materials that may be formed by injection molding or another suitable process. Forming the manifold from plastic or polymeric materials may provide advantages in cost and weight over other materials such as aluminum or steel. However, the use of plastic materials presents a challenge with respect to forming the passages and apertures that form the flow-control orifices. Known plastic molding or forming techniques may be ill-suited to form relatively long, deep, and intersecting passages required for the flow-control orifices.

In one or more embodiments, the manifold 14 may be formed of one or more (e.g., three) wall members or layers that are fixed and sealed to one another, including a first or outer wall member 32, a second or inner wall member 36, and a third or medial wall member 34. The outer wall member 32 may include a front face 32a and a rear face 32b, the front face 32a may define one or more apertures 38 that are configured to receive one or more inlet connectors 22a, 22b, 22c and outlet connectors 24a, 24b, 24c, 24d. As an example, the apertures 38 may include female threads configured to engage threads formed on the inlets 22a, 22b, 22c and the outlets 24a, 24b, 24c, 24d. However, in another embodiment, the apertures may be configured to receive self-tapping threads formed on the inlets 22a, 22b, 22c and the outlets 24a, 24b, 24c, 24d.

The manifold 14 may include one or more (e.g., eight) control valves 42 that may be at least partially disposed in or seated to a rear surface 36b of the inner wall member 36. The control valves 42 may be fluidly connected to the inlets 22 and outlets 24 and may be actuated by one or more actuators or solenoids 40 that may be disposed within an actuator receptacle 30 formed in the housing 20. The solenoids 40 may be configured to actuate the control valves 42 to open the control valves 42 completely, completely close the control valves 42, or partially open the control valves 42 to permit a predetermined amount of air to flow between the inlets 22 and the outlets 24. The manifold 14 may also include a retainer plate 44 that may be formed of a magnetic material that is relatively more rigid than the inner, outer, and medial wall members 32, 34, 36, such as low carbon steel or another suitable alloy. The retainer plate 44 may be configured to retain each of the control valves 42 by sandwiching flanges 46 of the control valves against the rear face 36a of the inner wall member 36.

While eight control valves 42 are shown, one of skilled in the art would appreciate that a greater number of control valves or fewer control valves may be employed.

The housing 20 may also include or define another receptacle such as an electronic control unit (ECU) receptacle 28 that may house an ECU 26 or another control device. The ECU 26 may be configured to receive signals from the vehicle and command the IAMM 12 based on the received signals to actuate the vehicle air springs (e.g., raise, lower, vent, etc.). The housing 20 may include one or more connecting apertures 21 configured to receive fasteners 23 that may extend through each of the outer, medial, and inner walls members 32, 34, 36 to fix the manifold 14 to the housing 20.

The manifold 14 may also include one or more check valves 50 that may be disposed in one or more passages defined by each of the outer wall member 32, the medial wall member 34, and the inner wall member 36. The check valves 50 may be configured to permit one-way air flow between one or more of the passages formed within the outer wall member 32, the medial wall member 34, and the inner wall member 36.

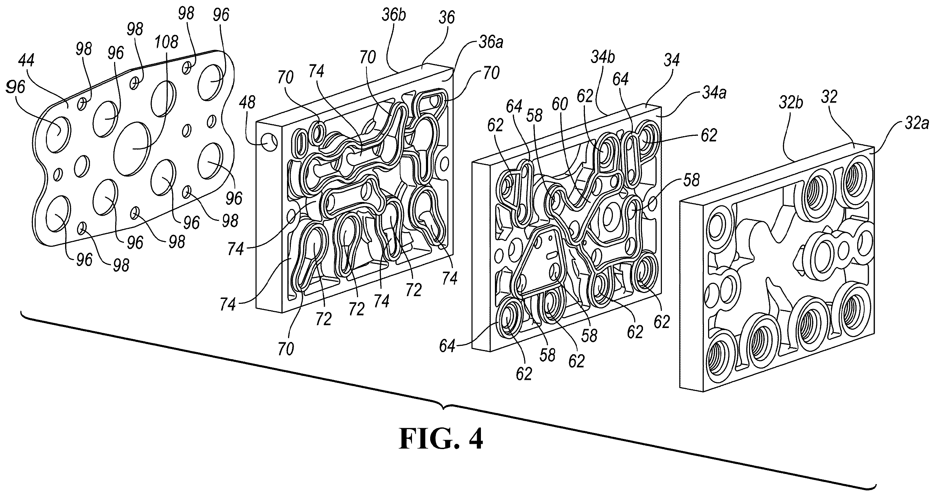

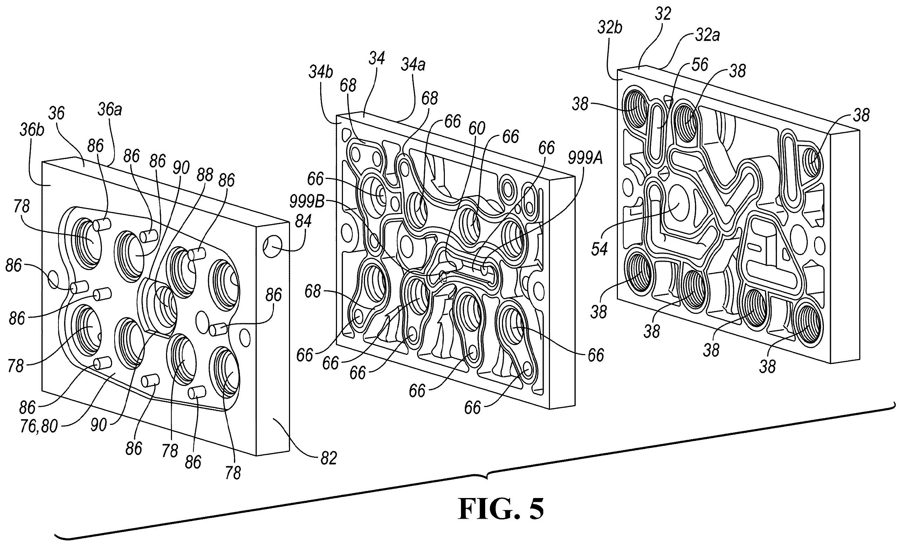

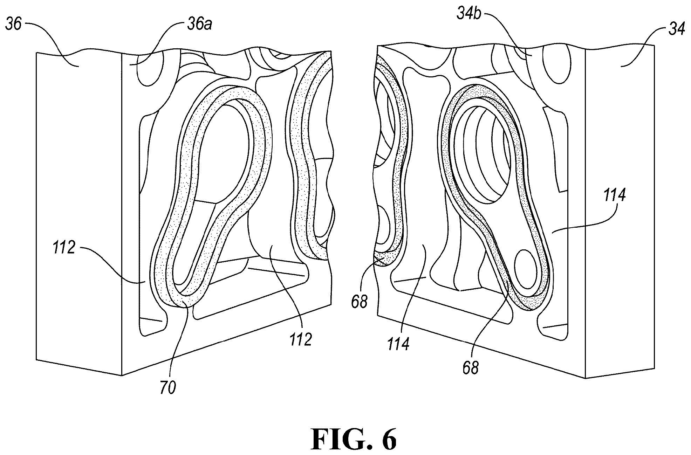

FIG. 4 shows a front-perspective-exploded view of the manifold 14. FIG. 5 shows a rear-perspective-exploded view of the manifold. FIG. 6 shows detail views of connection features formed on the inner wall member 36 and the medial wall member 34. The outer wall member 32 may include the front face 32a arranged to oppose a rear face 32b, and the apertures 38 configured for the inlets 22 and outlets 24 may be through-holes that extend from the front face 36a to the rear face 36b. The apertures 38 may be fluidly connected to one or more outer wall flow-control orifices 54, one or more outer wall flow-control passages 56, or some combination thereof. One or more first connection channels 52 may be disposed on the rear face 32b of the outer wall member 32 and arranged to at least partially surround each of the apertures 38, outer wall flow-control orifices 54 and the outer wall flow-control passages 56.

The medial wall member 34 may include a front face 34a and a rear face 34b that opposes the front face 34a. The medial wall member may also include one or more apertures 62, one or more medial wall flow-control orifices 58, and one or more medial wall flow-control passages 60. The one or more apertures 62 may correspond to the inlet and outlet apertures 38 of the outer wall member 32. In other words, the apertures 62 of the medial wall member 34 may be substantially aligned with apertures 38 of the outer wall member 32. The medial wall flow-control orifices 58 and passages 60 may be fluidly connected to one or more of the apertures 62 and the outer wall flow-control orifices 54 and the outer wall flow-control passages 56.
The front face 34a of the medial wall may include one or more first connection projections 64 that may at least partially surround the medial wall apertures 62, the medial wall flow-control orifices 58, and the medial wall flow-control passages 60. The first connection projections 64 of the front face 34a of the medial wall member 34 may correspond to the first connection channels 52 so that once the outer wall member 32 is layered onto the medial wall member 34, the first connection channels 52 receive the first connection projections 64. As will be described in greater detail below, the first connection projections 64 may be bonded to the first connection channels 52 in such a manner as to form a hermetic seal and a fixed connection between the rear face 32b of the outer wall member 32 and the front face 34a of the medial wall member 34.

The rear face 34b of the medial wall member 34 may include one or more second medial wall flow-control orifices 66 that may be configured to receive air from the medial wall flow-control orifices 58 and the medial wall flow-control passages 60. In one or more embodiments, the shape, size and position of the second medial wall flow-control orifices may be different than the shape, size and position of the first medial wall flow-control orifices 58. Second connection channels 68 may extend around or at least partially surround the second medial wall flow-control orifices 66, and the second connection channels 68 may be configured to receive a second connection projection 70 disposed on or formed with the front face 36a of the inner wall member 36. The rear face 34b may include one or more flow-restrictor orifices 999A and 999B of different sizes that can purposely create a controlled pressure differential between the outer wall member 32 and inner wall member 36.

The front face 36a of the inner wall member 36 may include one or more inner wall flow-control orifices 72 and one or more inner wall flow-control passages 74 that may be fluidly connected to the one or more flow control orifices and the second medial wall flow-control orifices 66. The second connection projection 70 may at least partially surround the one or more inner wall flow-control orifices 72 and one or more inner wall flow-control passages 74. The rear face 36b of the inner wall member 36 may define a recessed pocket 76 and a base 80 of the recessed pocket may define one or more control valve apertures 78 and one or more pressure sensor apertures 88. The inner wall member 36 may include lateral sides 82 and the sides 82 may define an exhaust or vent aperture 84 that may be configured to exhaust a predetermined quantity of compressed air.

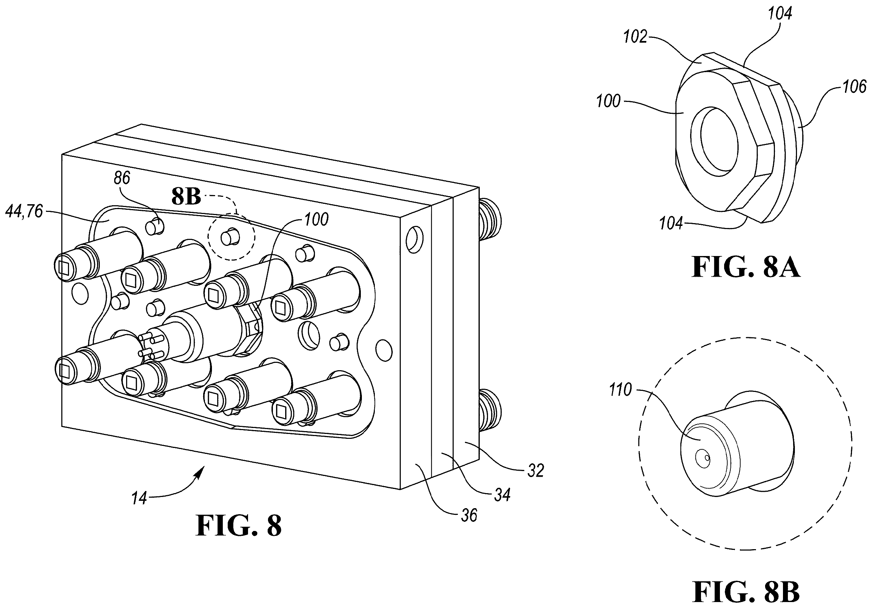

The recessed pocket 76 may be configured to receive the retainer plate 44 so that the retainer plate 44 is nested within the recessed pocket 76. The control valve apertures 78 may be a counterbore hole, in which the major diameter of the counterbore is configured to receive the flange 46 and the minor diameter of the counter bore is configured to receive of the control valve 42. The pressure sensor aperture 88 may also include a counterbore and the major diameter may be configured to receive a flange 102 of a pressure sensor fastener 100 (each shown in FIG. 8A). As an example, the major diameter of the counterbore may include one or more flats 90 that may engage one or more flats 104 of the pressure sensor fastener 100. Alternatively or additionally, the pressure sensor fastener may include an O-ring 106 that may be disposed beneath the flange 104 (FIG. 8A) and which may be received by the pressure sensor aperture 88. In some embodiments, the pressure sensor fastener 100 may be referred to as an adapter.

The retainer plate 44 may include control valve apertures 96, a pressure sensor aperture 108, and one or more stud aperture 98. A portion of the control valves (e.g., a second portion 45) may extend through the each of the control valve apertures 96 and the flange 46 of each control valve 42 may be sandwiched between the retainer plate 44 and the rear face 36b (e.g., the counterbore of aperture 78). The pressure sensor aperture 88 may be disposed in a relatively central location as compared to the control valve aperture 96. The stud apertures 98 may receive one or more studs 86 that may extend from the base 80 of the recessed pocket 76. After the retainer plate 44 is disposed onto the studs 86 and within the recessed pocket 76, distal ends of the studs 86 may be upset or deformed to form a rivet head 110 (FIG. 8B) that may fix the retainer plate 44 to within the recessed pocket 76.

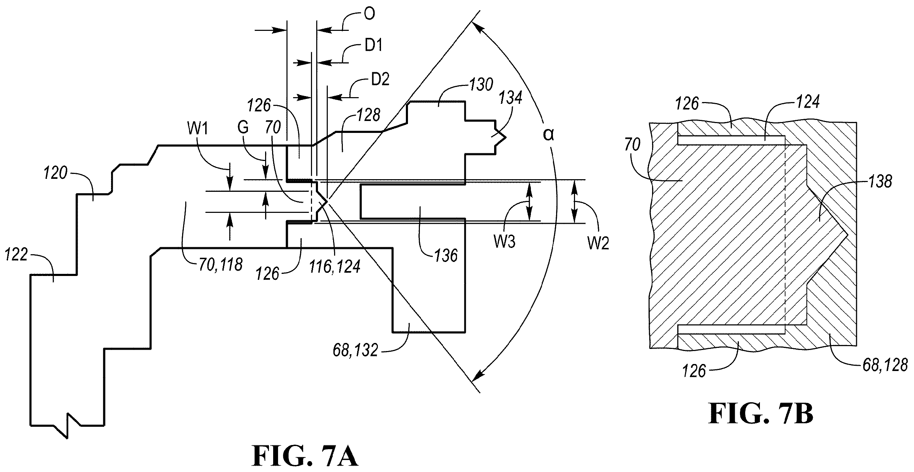

FIG. 7A shows a schematic cross-sectional representation of a connection joint formed between one of the connection projections (e.g., the second connection projection 70) and one of the connection channels (e.g., the second connection channel 68). Peripheral portions of the flow-control orifices and the flow-control passages of each of the wall members that engage one another may be coincidental to one another to enable communication of compressed air between the passages and orifices of each of the wall members.

FIG. 7B shows a schematic cross-sectional detail representation of FIG. 7A. The connection projection 70 may include a distal end 116 and one or more legs such as a first leg 118second leg 120, and a third leg 122. The distal end 116 may be tapered away from the first leg 118 to a point having a substantially triangular cross-section. The second leg 120 may extend from the first leg 118 and extend in a direction substantially orthogonal to the first leg 118 and the third leg 122 may be connected to the second leg 120 by another bend. In one or more embodiments, the third leg 122 may be arranged substantially parallel to the second leg 120. The second and third legs 120, 122 may be disposed within sidewalls 112 (FIG. 6) forming the inner wall flow-control orifices 72 and the inner wall flow-control passages 74 and the second connection projection 70 may extend away from the sidewalls 112.

One or more of the connection channels, such as the second connection channel 68, may include a main body 128, one or more lips 126, a first arm 130, a second arm 132, and a third arm 134. The lips 126 may extend from the main body and define a groove 124 that may be configured to receive the distal end 116 of the second connection projection 70. The first arm 130 and the second arm 132 may each extend away from the main body 128 in a direction substantially orthogonal to the main body 128. The third arm 134 may extend away from the main body in a directional substantially parallel to the main body, and the first arm 130, the second arm 132, and the third arm 134 may each be disposed in one or more sidewalls 114 that surround or define the medial wall flow-control orifices 58 and the medial wall flow-control passages 60. A recessed portion 136 may be formed between the first arm 130 and the second arm 132 and the recessed portion 136 may be configured to receive an engagement feature disposed within the sidewalls 114 to seat the second connection projection 70 within the medial wall member 34.

As an example, one or more of the connection projections 70 and one or more of the connection channels 68 may be formed by a plastic or polymeric material, such as a thermoplastic (e.g., ABS, Nylon6) and the connection projections 70 and connection channels 68 may be formed by an injection molding process such as over molding, in which the projections 70 and channels 68 are disposed in a mold or cavity and the material forming the wall members is injected so that the projections and channels are embedded or at least partially encapsulated within the wall members. Other suitable processes may be used to form the connection projections and connection channels, including two-shot molding in which two distinct materials are injection molded substantially simultaneously or prior to the one of the two materials cooling and hardening to the desired size and shape.

The connection projections 70 and the connection channels 68 may be connected by a molecular bond or molecular intermixing that may be formed by friction welding. Friction welding may involve the use of relative motion and relatively high force in order to create frictional heat to form a weld interface or weld zone 138. Sides of the distal end 116 may form an angle α that may range between 81 degrees and 121 degrees and the distal end 116 may be inserted into the groove 124 so that the distal end 116 overlaps the pair of lips 126. The distal end 116 weld zone 138 may be sized so that it is between 20 to 25% of the cross-sectional area of the projection 70. Prior to welding, the distal end 116 may have peripheral distance ranging between 5.5 mm and 6.6 mm and a cross-sectional area that may range between 1.6 mm and 2.6 mm. After welding, the distal end 116 may have peripheral distance ranging between 3.1 mm and 4.7 mm and a cross-sectional area that may range between 0.4 mm and 0.6 mm.

The overlap O between the distal end 116 and the lips 126 may range between 0.8 mm and 1.6 mm. The distal end 116 or the non-tapered portion of the distal end may be spaced apart from one of the lips 126 to form a gap G that may range between 0.06 mm and 0.1 mm and a base of the tapered portion of the distal end 116 may have a first width W1 that may range between 0.71 mm and 1.1 mm, the groove 124 may have a second width W2 that may range between 1.63 mm and 2.03 mm, and the non-tapered portion of the distal end 116 may have a third width W3 that may range between 1.46 mm and 1.86 mm. A base of the groove 124 may be spaced apart from the non-tapered portion of the distal end 116 by a first overlapping distance D1 that may range between 0.15 mm and 0.25 mm, and the tapered portion of the distal end 116 may have a second distance D2 that may range between 0.30 mm and 0.46 mm.

FIG. 8 shows a rear-perspective view of the manifold 14 in which the retainer plate 44 is disposed within the recessed pocket 76. As shown, the studs 86 extend through the stud apertures 98 but the ends of the studs 86 are not yet upset or formed into a rivet head. FIG. 8B shows the distal end of a stud 86 formed into the rivet head 110 to fix the retainer plate 44 to within the recessed pocket 76.

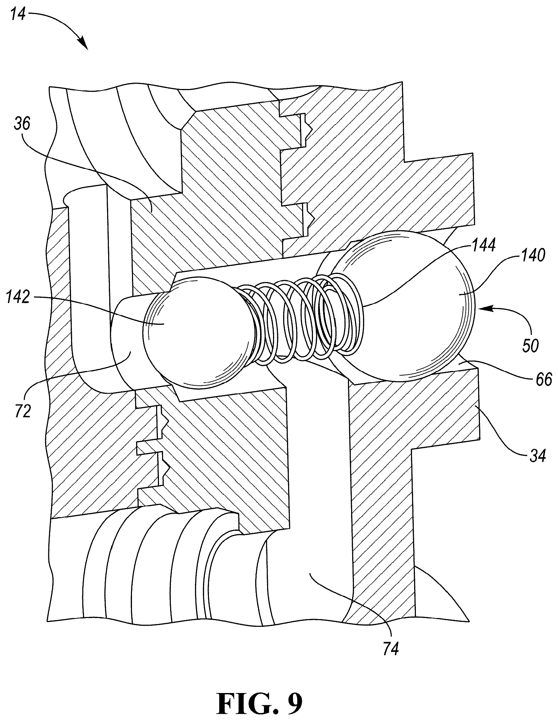

FIG. 9 shows a cross-sectional view of an exemplary check valve 50 disposed between a pair of wall members (e.g., the middle wall member 34 and the inner wall member 36). As stated above, the manifold 14 may include one or more flow-control devices such as flow-control orifices 72 and flow-control passages 74. The flow-control devices may also include one or more check valves 50 and the check valves 50 may be disposed closer to the edges or lateral walls of the manifold 14 and the flow control passages and flow-control orifices may be disposed closer to the center or middle of the manifold 14. The check valve 50 may include a first ball 140, a second ball 142, and a spring 144 disposed between the first and second balls 140, 142. As an example, the spring 144 may be configured so that once air pressure within the inner wall flow-control orifice 72 exceeds the air pressure within the second medial wall flow-control orifices 66, the second ball is displaced towards the first ball 140 and the spring is compressed and/or the first ball 140 is displaced to permit air to flow into the inner wall flow-control passage 74.

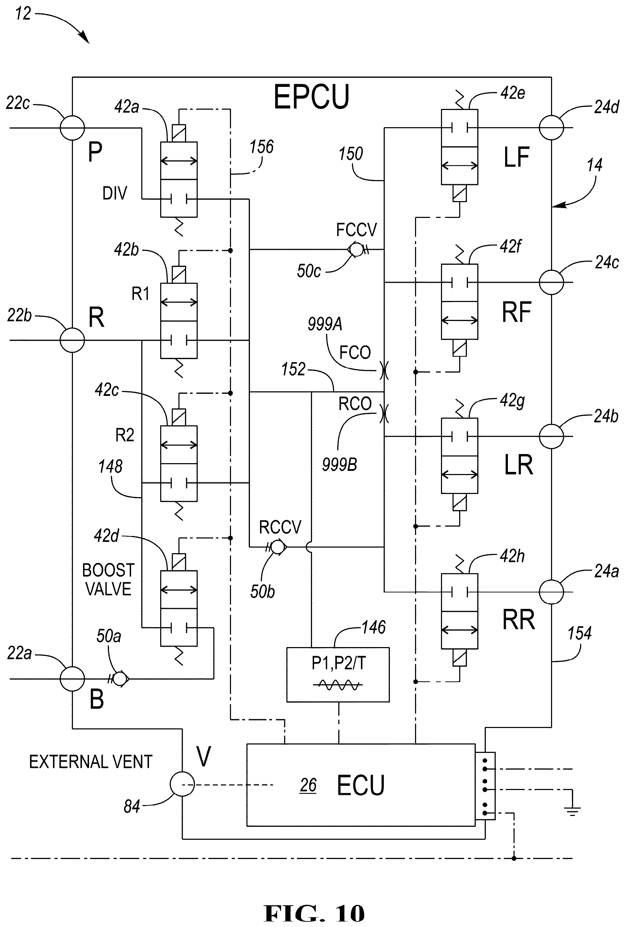

FIG. 10 shows a schematic diagram of the IAMM 12 showing pneumatic and electric connections of the IAMM 12 according to one or more embodiments. The IAMM 12 includes a boost outlet 22a, a reserve inlet 22b, and a pressure inlet 22c. The outlets of the IAMM may correspond to the suspension air springs of the vehicle, such as the right rear outlet 24a, left rear outlet 24b, right front outlet 24c, and the left front outlet 24d. The boost outlet 22a may be operatively connected to a boost valve 42d and a check valve 50a may be disposed between the boost valve 42d and the boost outlet 22a. The pressure inlet 22c may be operatively connected to the pressure control valve 42a. The boost valve 42d may be connected in series with a first reserve valve 42b and a second reserve valve 42c, and the boost outlet 22b may be directly connected to the first reserve valve 42b. The reserve inlet 22b, first reserve valve 42b, the second reserve valve 42c, the boost valve 42d, and the boost outlet 22a may be connected to one another in a first circuit 148.

The left front control valve 42e, right front control valve 42f, left rear control valve 42g, and right rear control valve 42h may be connected to one another by a second circuit 150 which may be in communication with a pressure and temperature sensor 146 by way of a third circuit 152. The third circuit 152 may extend from the pressure and temperature sensor 146 to the second reserve valve 42c, the first reserve valve 42b, and the pressure control valve 42a. The third circuit 152 may be interconnected to the second circuit 150 at one or more points of connection. As an example, a first interconnection may be formed between the left rear control valve 42g and the right rear control valve 42h, a second interconnection may be formed between the left rear control valve 42g and the right front control valve 42f, and a third interconnection may be formed between the left front control valve 42e and the right front control valve 42f. Alternatively or additionally, a second check valve 50b may be disposed within the third circuit 152 adjacent to the first interconnection, and a third check valve 50c

may be disposed within the third circuit 152 at the third interconnection between the left front and the right front control valves 42e, 42f.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. An air management module (12) for use in a vehicle pneumatic suspension system, the air management module (12) comprising:
a plurality of inlets (22a, 22b, 22c) configured to receive compressed air from a vehicle air compressor;
a plurality of outlets (24a, 24b, 24c, 24d) configured to provide the compressed air to a plurality of vehicle air springs and remote reservoir;
a plurality of control valves (42) configured to receive the compressed air from the inlets (22a, 22b, 22c) and selectively provide the compressed air to the plurality of outlets (24a, 24b, 24c, 24d); and
a manifold (14) configured to route the compressed air from the plurality of inlets (22a, 22b, 22c) to the plurality of outlets (24a, 24b, 24c, 24d), the manifold (14) including,
a plurality of wall members (32, 34, 36) layered on top of one another, each wall member (32, 34, 36) of the plurality of wall members (32, 34, 36) defining a plurality of apertures (38, 78, 88, 62), some of the plurality of apertures (38, 78, 88, 62) collectively forming a plurality of passages (56, 60, 74) configured to direct the compressed air from the plurality of outlets (24a, 24b, 24c, 24d) to the plurality of inlets (22a, 22b, 22c).

2. The air management module (12) of claim 1, wherein the plurality of wall members (32, 34, 36) of the manifold (14) are fixed to one another by a molecular bond and where the bonding zone may be 20 to 25 percent of the projection cross-sectional area.

3. The air management module (12) of claim 1 or 2, wherein the plurality of wall members (32, 34, 36) include an outer wall member (32), an inner wall member (36), and a medial wall member (34) disposed between the outer wall member (32) and the inner wall member (36), wherein the medial wall member (34) is fixed to the outer wall member (32) and the inner wall member (36) so that a first hermetic seal is formed between the medial wall member (34) and the outer wall member (32) and a second hermetic seal is formed between the medial wall member (34) and the inner wall member (36).

4. The air management module (12) of any one of claims 1 to 3, wherein the plurality of passages (56, 60, 74) form a plurality of flow-control orifices configured to minimize a pressure differential between one or more inlets (22a, 22b, 22c) of the plurality of inlets (22a, 22b, 22c) and one or more outlets (24a, 24b, 24c, 24d) of the plurality of outlets (24a, 24b, 24c, 24d) and where at least one flow-control orifice is a flow-restrictor orifice purposefully sized to create a prescribed pressure differential between at least two different outlets (24a, 24b, 24c, 24d).

5. The air management module (12) of claim 4, wherein the plurality of wall members (32, 34, 36) include an outer wall member (32), an inner wall member (36), and a medial wall member (34) disposed between the outer wall member (32) and the inner wall member (36), the medial wall member (34) including a first mating side and a second mating side, the second mating side opposing the first mating side, the inner wall member (36) including a third mating side lying along the second mating side of the medial wall member (34), wherein the second mating side defines a first flow-control orifice of the plurality of flow-control orifices, and the first mating side defines a second flow-control orifice of the plurality of flow-control orifices, wherein an outer periphery of the first flow-control orifice is substantially coincidental to an outer periphery of the second flow-control orifice.

6. The air management module (12) of claim 4 or 5, further comprising:
a check valve (50) disposed between a pair of wall members (32, 34, 36) or the plurality of wall members (32, 34, 36), the check valve (50) configured to selectively permit compressed air to flow between each wall member (32, 34, 36) of the pair of wall members (32, 34, 36).

7. The air management module of claim 6, wherein each wall member (32, 34, 36) of the pair of wall members (32, 34, 36) includes edge regions and a central region, wherein the check valve (50) is disposed within the edge regions of the pair of wall members (32, 34, 36); and/or
wherein the plurality of flow-control orifices are formed within central regions of the pair of wall members (32, 34, 36).

8. The air management module (12) of claim 1, wherein
each control valve of the plurality of control valves (42) including a first portion and a second portion; and
wherein the plurality of wall members (32, 34, 36) are a plurality of layers comprising: an outer layer, the plurality of inlets (22a, 22b, 22c) and the plurality of outlets (24a, 24b, 24c, 24d) connected to the outer layer,
an inner layer, the first portion of each control valve (42) of the plurality of control valves (42) seated within the inner layer,
a medial layer sandwiched between the outer layer and the inner layer, wherein the outer layer, the inner layer, and the medial layer are each injected molded, wherein the medial layer includes a rear surface and a front surface, the rear surface opposing the front surface, and wherein the rear surface of the medial layer is fixed to the inner layer and the front surface of the medial layer is fixed to the outer layer.

9. The air management module (12) of claim 8, wherein at least one of the outer layer and the inner layer is fixed to the medial layer by friction welding, particularly wherein the rear surface of the medial layer defines a connecting channel and a front surface of the inner layer includes a connecting projection, wherein the connecting channel receives the connecting projection, and wherein the medial layer and the inner layer are fixed to one another by friction weld joints formed between the connecting projection and the connecting channel.

10. The air management module (12) of claim 8 or 9, further comprising:
a retainer plate (44) fixed to a rear portion of the inner layer, wherein a control valve (42) of the plurality of control valves (42) includes a first flange disposed between the first portion and the second portion, wherein the retainer plate (44) sandwiches the first flange to the rear portion of the inner layer.

11. The air management module (12) of claim 10, further comprising:
a pressure sensor at least partially disposed within the inner layer; and an adapter member fixed to the pressure sensor and including a second flange,
the second flange sandwiched between the retainer plate (44) and the rear portion of the inner layer,
particularly wherein the air management module (12) further comprises:
an O-ring disposed between the second flange and the rear portion of the inner layer.

12. The air management module (12) of claim 10 or 11, wherein the rear portion of the inner layer defines a recessed pocket (76), and wherein the retainer plate (44) is disposed in the recessed pocket (76), particularly wherein the recessed pocket (76) includes a base (80), wherein one or more studs (86) extend from the base (80), and wherein the retainer plate (44) is fixed to the base (80) by upsetting distal ends of the one or more studs (86) to form a rivet head (110).

13. The air management module (12) of claim 8 or 9, further comprising:
a retainer plate (44) fixed to a rear portion of the inner layer;
a housing (20) including a first receptacle and a second receptacle;
an electronic control unit (26) disposed in the second receptacle; and
a plurality of actuators disposed in the first receptacle, wherein the plurality of control valves (42) are operatively coupled to the plurality of actuators and wherein the retainer plate (44) is sandwich between the first receptacle and the inner layer.

14. A method of manufacturing an air management module (12), the method comprising:
forming, by injection molding, an outer manifold layer defining one or more first passages and one or more apertures, the one or more apertures configured to receive an inlet connector and an outlet connector, the inlet and outlet connectors configured to be fluidly connected to the one or more first passages;
forming, by injection molding, a medial manifold layer defining one or more second passages;
forming, by injection molding, an inner manifold layer defining one or more third passages, wherein the one or more first passages, the one or more second passages, and the one or more third passages are collectively configured to form one or more flow-control orifices configured to minimize a pressure differential between the inlet connector and the outlet connector and where at least one flow-control orifice is a flow-restrictor orifice purposefully sized to create a prescribed pressure differential between at least two different outlets; and
fixing, by friction welding, the medial manifold layer to the outer manifold layer and the inner manifold layer.

15. The method of claim 14, further comprising:
hermetically sealing the medial manifold layer to the outer manifold layer and the inner manifold layer; and/or fixing one or more control valves (42) to the inner manifold layer by riveting a retaining plate to a rear portion of the inner manifold layer, wherein the retaining plate is configured to sandwich a portion of the one or more control valves (42) to the rear portion of the inner manifold layer.
